Europäisches Patentamt

European Patent Office

Office européen des brevets

(11) Veröffentlichungsnummer: **0 356 891**
**A2**

## (12) EUROPÄISCHE PATENTANMELDUNG

(21) Anmeldenummer: 89115508.7

(51) Int. Cl.5: **G02B 23/08**

(22) Anmeldetag: 23.08.89

(30) Priorität: 01.09.88 DE 3829708

(43) Veröffentlichungstag der Anmeldung:
07.03.90 Patentblatt 90/10

(84) Benannte Vertragsstaaten:
CH DE FR GB IT LI NL

(71) Anmelder: **Firma Carl Zeiss**

**D-7920 Heidenheim (Brenz)(DE)**
(84) **CH DE FR IT LI NL**

Anmelder: **CARL-ZEISS-STIFTUNG trading as CARL ZEISS**

**D-7920 Heidenheim (Brenz)(DE)**
(84) **GB**

(72) Erfinder: **Abele, Alfons**
**Böbinger Strasse 12/1**
**D-7070 Schwäbisch Gmünd(DE)**
Erfinder: **Völker, Klaus**
**Am Vietrieb 28**
**D-7080 Aalen(DE)**

(54) Umschaltbarer Winkelspiegel für Periskope.

(57) Ein umschaltbares Winkelspiegelsystem für Periskope besitzt für die Blickrichtung nach vorne eine gerade Anzahl von Reflexionsflächen und für die Blickrichtung nach hinten eine ungerade Anzahl von Reflexionsflächen, von denen eine um einen exzentrisch angeordneten Drehpunkt schwenkbar ist. Bei einfacher Konstruktion und geringer Anzahl von zu bewegenden Elementen wird beim Umschalten der Blickrichtung der Bildsturz kompensiert und es werden bei gleicher periskopischer Höhe ähnliche Sehfelder wie bei Nichtumschalt-Winkelspiegeln erhalten.

## Fig. 3

EP 0 356 891 A2

## Umschaltbarer Winkelspiegel für Periskope

Die Erfindung betrifft ein umschaltbares Winkelspiegelsystem für Periskope nach dem Oberbegriff des Anspruchs 1.

Umschaltbare Winkelspiegelsysteme für Periskope sollen die Beobachtung über Sichthindernisse hinweg in zwei Richtungen ermöglichen, vorzugsweise nach vorne und nach hinten, ohne daß der Beobachter beim Wechsel der Sichtrichtung seinen Beobachtungsplatz verlassen muß.

Periskopische Winkelspiegelsystem mit umschaltbarer Blickrichtung sind beispielsweise aus der DE-PS 26 23 955 bekannt. Bei diesen bekannten Periskop wird für eine der Blickrichtungen die eintreffende Strahlung über mindestens eine Spiegelfläche an der Innenwand des Periskopschachtes gelenkt. Der Nachteil dieses bekannten Spiegelsystems besteht darin, daß bei schrägem Einblick Bild- bzw. Sehfeldbeschnitte hinzunehmen sind oder störende Doppelbilder auftreten.

Der Erfindung liegt die Aufgabe zugrunde, die Umschaltung der Blickrichtungen von vorn nach hinten mit einfachen Mitteln zu erreichen, den bei Umschaltung der Blickrichtung auftretenden Bildsturz zu kompensieren und es dem Beobachter zu ermöglichen, seine einmal eingenommene Kopf- und Körperhaltung in beiden möglichen Blickrichtungen beizubehalten.

Diese Aufgabe wird durch die kennzeichnenden Merkmale des Anspruchs 1 gelöst.

Zweckmäßigerweise ist das erfindungsgemäße Winkelspiegelsystem in einem Schacht untergebracht, und die Spiegel sind mit mechanischen oder elektrischen Mitteln bewegbar.

Der Abstand zu einem beobachtetem Objekt läßt sich scheinbar verkürzen und das Sehfeld läßt sich vergrößern, wenn der Teil des Schachtes, der sich zwischen dem Eintrittspiegel und dem Austrittspiegel des Winkelspiegelsystems befindet, aus einem optisch dichterem Medium besteht als der übrige Teil des Schachtes.

Durch die Wahl geeigneter Drehpunkte der Eintrittsreflexionsfläche läßt sich der Eintrittsstrahl mit der Blickrichtung nach vorn gegenüber dem Eintrittsstrahl mit der Blickrichtung nach hinten in der Höhe verschieben.

Die mit der Erfindung erzielten Vorteile bestehen insbesondere in der Einfachheit der Konstruktion, in der geringen Anzahl der zu bewegenden Elemente und in der Tatsache, daß bei gleicher periskopischer Höhe ähnliche Sehfelder wie bei nichtumschaltbaren Winkelspiegeln erhalten werden.

Ein Ausführungsbeispiel der Erfindung ist in der Zeichnung dargestellt und wird im folgenden näher beschrieben.

Es zeigen

Fig. 1 eine schematische Darstellung einer ersten Ausführungsform des beschriebenen Winkelspiegelsystems für die Blickrichtung nach hinten;

Fig. 2 die in Fig. 1 gezeigte Ausführungsform für die Blickrichtung nach vorne;

Fig. 3 das in den Fig. 1 und 2 gezeigte Winkelspiegelsystem in seiner Anordnung in einem Periskopschacht;

Fig. 4 eine zweite Ausführungsform eines erfindungsgemäßen Winkelspiegelsystems in seiner Anordnung in einem Periskopschacht;

Fig. 5 eine dritte Ausführungsform eines erfindungsgemäßen Winkelspiegelsystems in einem Periskopschacht;

Fig. 6 eine schematische Darstellung einer vierten Ausführungsform des erfindungsgemäßen Winkelspiegelsystems für die Blickrichtung nach hinten;

Fig. 7 die in Fig. 6 gezeigte Ausführungsform des Winkelspiegelsystems für die Blickrichtung nach vorne;

Fig. 8 ein in der Höhe verschobener Eintrittsstrahl für die Blickrichtung nach vorne durch Drehung der Eintrittsflächen der in Fig. 7 dargestellten Anordnung;

Fig. 9 die Anordnung eines drehbaren Winkelspiegelsystems in einem Periskopschacht;

Fig. 10 die Anordnung eines drehbaren Prismenspiegelsystems in einem Periskopschacht;

Fig. 11a eine Verstellmechanik für das in Fig. 4 dargestellte Prismenspiegelsystem;

Fig. 11b die in Fig. 11a dargestellte mechanische Verstelleinrichtung entlang der Schnittlinie XIb.

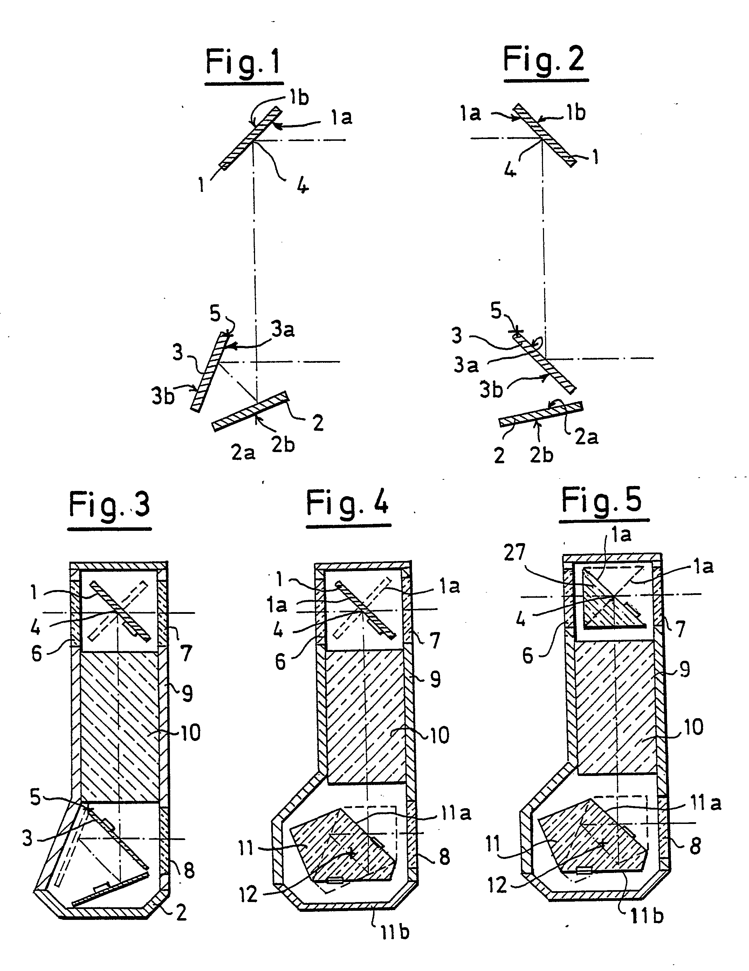

In den Darstellungen der Fig. 1 und 2 sind der Eintrittsspiegel mit dem Bezugszeichen (1) und die beiden Austrittsspiegel mit den Bezugszeichen (2) und (3) bezeichnet. Die zu den Spiegeln gehörenden Reflexionsflächen sind mit (1a, 1b, 2a, 2b, 3a und 3b) bezeichnet.

In der Fig. 1 ist die Lage der Sichtachse für die Blickrichtung nach hinten gezeigt. Der eintretenden Lichtstrahl wird durch die Reflexionsfläche (1a) um 90° senkrecht nach unten gelenkt und durch die beiden unter 45° zueinander angeordneten Reflexionsflächen (2a und 3a) waagrecht zum Beobachter umgelenkt. Durch gleichzeitiges Schwenken von Eintrittsspiegel (1) um 90° um den Drehpunkt (4) und von Austrittsspiegel (3) um 67,5° um den Drehpunkt (5) wird in die Lage der Sichtachse für Blickrichtung nach vorn, wie in Fig. 2 dargestellt, umgeschaltet. In diesem Fall wird der waagrecht eintreffende Eintrittslichtstrahl durch die Reflexionsfläche (1a) senkrecht nach unten und durch die parallel zur Reflexionsfläche (1a) angeordnete zweite Reflexionsfläche (3a) wieder um 90° in die Waagrechte umgelenkt zum Beobachter.

Die Umschaltung für die Blickrichtung nach vorn kann auch durch gleichzeitiges Schwenken von Eintrittsspiegel (1) und Austrittsspiegel (2) erfolgen, die Ablenkung der optischen Achse der Beobachtungsstrahlen erfolgt hierbei mit der Reflexionsfläche (2a). Es ist auch möglich, die Flächen (1b 2b und 3b) als Reflexionsflächen zu benützen. In den Fig. 3 und 4 sind konkrete Ausführungsbeispiele von erfindungsgemäßen, in einem Persikopschacht angeordneten Winkelspiegelsystem gezeigt. Der Eintrittsspiegel ist wieder mit (1), die beiden Austrittsspiegel mit (2 und 3) bezeichnet. Das vordere Eintrittsfenster des Periskopschachtes (9) beträgt die Bezeichnung (6), das rückwärtige Eintrittsfenster die Bezeichnung (7), das Austrittsfenster ist mit (8) bezeichnet. Durch Einbringung eines optisch dichteren Mediums (10) im mittleren Bereich des Schachtes kann im gezeigten Ausführungsbeispiel das Sehfeld vergrößert werden. Für die Blickrichtung nach vorn sind die Spiegel mit durchgezogenen Strichen gezeichnet, für die Blickrichtung nach hinten mit gestrichelten Linien. Die Umschaltung der Blickrichtung erfolgt in dem in Fig. 3 dargestellten Ausführungsbeispiel durch gleichzeitiges Schwenken von Spiegel (1) um 90° um den Drehpunkt (4) und von Spiegel (3) um 67,5° um den Drehpunkt (5).

In dem in Fig. 4 dargestellten Ausführungsbeispiel wurde anstelle der beiden Austrittsspiegel (2 und 3) ein Austrittsprisma (11) verwendet. Ein derartiges Prisma bietet den Vorteil eines größeren Sehfeldes. Die Umschaltung erfolgt in diesem Ausführungsbeispiel durch gleichzeitiges Schwenken des Eintrittsspiegels (1) um 90° um den Drehpunkt (4) und schwenken des Austrittsprismas (11) um 112,5° um den Drehpunkt (12). Bei dem in Fig. 4 dargestellten Ausführungsbeispiel wird der Beobachtungsstrahl am Austritt durch eine doppelt wirkende Spiegelfläche (11a) abgelenkt. Anstelle der Spiegelfläche (11a) kann auch die spiegelnde Fläche (11b) in den Strahlengang eingeschwenkt werden.

In der Fig. 5 ist ein Ausführungsbeispiel dargestellt, bei dem die Eintrittsspiegelfläche (1a) auf der Hypotenuse eines prismatischen Körpers (27) aufgebracht ist.

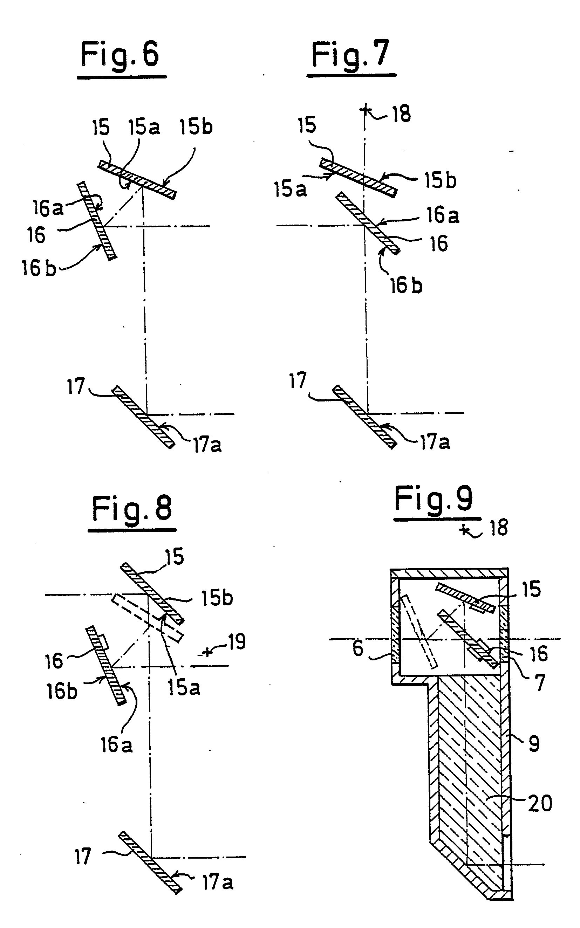

In den Darstellungen der Fig. 6, 7 und 8 sind die beiden Eintrittsspiegel mit (15 und 16) und der Austrittsspiegel mit (17) bezeichnet. Die zu den Spiegeln gehörenden Reflexionsflächen sind mit (15a, 15b, 16a, 16b und 17a) bezeichnet.

Die Darstellung der Fig. 6 zeigt ein Ausführungsbeispiel mit der Lage der Sichtachse für die Blickrichtung nach hinten. In diesem Fall wird die optische Achse des Beobachtungsstrahles durch zwei unter 45° angeordnete Reflexionsflächen (15a und 16a) auf der waagrechten Auftrefflinie senkrecht nach unten und durch eine dritte Reflexionsfläche (17a) wieder in die Waagrechte abgelenkt. Durch Schwenken des Eintrittsspiegel (16) um 22,5° um den Drehpunkt (18) (in Fig. 7 dargestellt) oder durch Schwenken des Eintrittsspiegels (15) um 22,5° um den Drehpunkt (19) (in Fig. 8 dargestellt) wird in die Lage der Sichtachse für Blickrichtung nach vorn umgeschaltet. Dabei wird die waagrecht verlaufende optische Achse der Beobachtungsstrahlen durch die Reflexionsfläche (16b) (in Fig. 7) oder durch die Reflexionsfläche (15a) (in Fig. 8) senkrecht nach unten und durch die parallel angeordnete zweite Reflexionsfläche (17a) wieder in die Waagrechte umgelenkt. Es ist auch möglich, die Flächen (15b und 16a) als Reflexionsflächen zu benutzen.

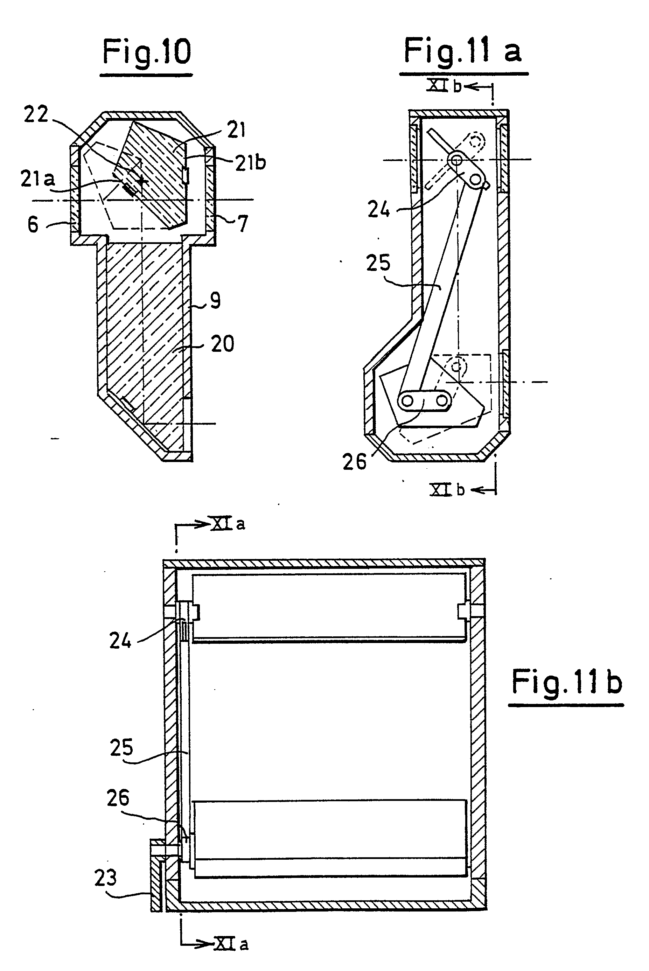

Die in den Figuren 9 und 10 dargestellten Ausführungsbeispiele zeigen die Anordnung der erfindungsgemäßen Winkelspiegelsysteme in Periskopschächten. In den Periskopschächten (9) sind die beiden Eintrittsspiegel mit (15 und 16) bezeichnet. Das vordere Eintrittsfenster ist mit (6), das rückwärtige Eintrittsfenster mit (7) bezeichnet. Anstelle des in den Figuren 6, 7 und 8 verwendeten Austrittsspiegel (17) wird im Ausführungsbeispiel nach Fig. 10 ein Austrittsprisma (20), welches bis zum Eintrittsspiegel geht, eingesetzt. Das Prisma bietet den Vorteil eines größeren Sehfeldes. Für die Blickrichtung nach vorn sind die Spiegel und das Prisma ausgezogen gezeichnet, für die Blickrichtung nach hinten gestrichelt.

In dem in Fig. 9 dargestellten Ausführungsbeispiel erfolgt die Umschaltung der Blickrichtung durch Schwenken von Eintrittsspiegel (16) um 22,5° um den Drehpunkt (18). Bei dem in Fig. 10 dargestellten Ausführungsbeispiel wird anstelle der beiden Eintrittsspiegel ein Eintrittsprisma (21) verwendet. Die Verwendung des Eintrittsprismas bietet den Vorteil eines größeren Sehfeldes. Die Umschaltung in eine andere Blickrichtung erfolgt durch Schwenken des Eintrittsprimas (21) um 157,5° um den Drehpunkt (22). Die Fläche (21a) ist in diesem Ausführungsbeispiel mit einer doppelt wirkenden Spiegelschicht belegt. Es ist auch möglich, die Fläche (21b) für die Strahlablenkung zu benutzen.

Die Drehung der Spiegel kann einzeln erfolgen oder gemeinsam mit Hilfe einer mechanischen Kopplung, beispielsweise mit den in Fig. 11a, 11b dargestellten Hebeln (23, 24, 25 und 26). Durch Betätigung des Hebels (23) erfolgt die Umschaltung.

**Ansprüche**

1. Umschaltbares Winkelspiegelsystem für Periskope für die Blickrichtung eines Beobachters auf die vor ihm und auf die hinter ihm befindliche Szene, dadurch gekennzeichnet, daß für die Blickrichtung nach vorne eine gerade Anzahl von Reflexionsflächen und für die Blickrichtung nach hinten eine ungerade Anzahl von Reflexionsflächen vorgesehen ist und daß für die Blickrichtung nach hinten eine der Reflexionsflächen um einen exzentrisch angeordneten Drehpunkt schwenkbar ist.

2. Umschaltbares Winkelspiegelsystem nach Anspruch 1, dadurch gekennzeichnet, für ein schnelles Umschalten der Blickrichtung von vorwärts nach rückwärts mechanische oder elektrische Mittel vorgesehen sind.

3. Umschaltbares Winkelspiegelsystem nach Anspruch 1, dadurch gekennzeichnet, daß die Reflexionsflächen in einem Schacht (9) angeordnet sind, der ein vorderes Eintrittsfenster (6) und ein hinteres Eintrittsfenster (7) sowie ein Austrittsfenster (8) aufweist.

4. Umschaltbares Winkelspiegelsystem nach Anspruch 3, dadurch gekennzeichnet, daß der sich zwischen den Reflexionsflächen mit gerader Anzahl und den Reflexionsflächen mit ungerader Anzahl befindliche Teil des Schachtes aus einem optisch dichteren Medium als der übrige Teil des Schachtes besteht.

5. Umschaltbares Winkelspiegelsystem für Periskope nach Anspruch 1, dadurch gekennzeichnet, daß für die Eintrittsreflexionsflächen verschiedene Drehpunkte vorgesehen sind.

6. Umschaltbares Winkelspiegelsystem nach Anspruch 1, dadurch gekennzeichnet, daß für die Blickrichtung nach vorn zur Umlenkung des eintretenden Lichtstrahls eine im Winkel von 45° zur Achse des Eintrittsstrahls angeordnete Eintrittsspiegelfläche (1a) und zur Umlenkung des austretenden Lichtstrahls eine erste parallel zur Eintrittsspiegelfläche (1a) angeordnete Austrittsspiegelfäche (3a) vorgesehen ist und daß zur Umschaltung für die Blickrichtung nach hinten eine zweite Austrittsspiegelfläche (2a) im Winkel von 45° zur ersten Fläche (3a) in den Strahlengang eingeschaltet wird und die Eintrittsspiegelfläche (1a) um 90° um einen zentrisch in ihr angeordneten Drehpunkt (4) und die Spiegelfläche (3a) um 67,5° um einen exzentrisch zu ihr angeordneten Drehpunkt (5) geschwenkt wird.

7. Umschaltbares Winkelspiegelsystem nach Anspruch 6, dadurch gekennzeichnet, daß die Eintrittsspiegelfläche (1a) auf einer Planplatte aufgebracht ist.

8. Umschaltbares Winkelspiegelsystem nach Anspruch 7, dadurch gekennzeichnet, daß die Eintrittsspiegelfläche (1a) auf der Hypotenuse eines prismatischen Körpers aufgebracht ist.

9. Umschaltbares Winkelspiegelsystem nach Anspruch 1, dadurch gekennzeichnet, daß für die Blickrichtung nach vorn zur Umlenkung des eintretenden Lichtstrahls eine im Winkel von 45° zur Achse des Eintrittsstrahls angeordnete Eintrittsspiegelfläche (1a) und zur Umlenkung des austretenden Lichtstrahls eine Spiegelfläche eines Prisma (11) mit zwei Reflexionsflächen (11a und 11b) vorgesehen ist und daß zur Umschaltung für die Blickrichtung nach hinten die Eintrittsspiegelfläche (1a) um 90° um einen Zentrisan in ihr angeordneten Drehpunkt (4) und das Prisma (11) um 12° um einen exzentrisch zur Spiegelfläche (11a) angeordneten Drehpunkt (12) geschwenkt wird und die zweite Reflexionsfläche (11b) wirksam wird.

10. Umschaltbares Winkelspiegelsystem nach Anspruch 1, dadurch gekennzeichnet, daß für die Blickrichtung nach vorn eine erste im Winkel von 45° zur Achse des Eintrittsstrahls angeordnete Eintrittsspiegelfläche (16b) und zur Umlenkung des Austrittsstrahls eine parallel zur Eintrittsfläche (16b) angeordnete Austrittsspiegelfläche (17a) vorgesehen ist und daß zur Umschaltung der Blickrichtung von vorn nach hinten der Eintrittsspiegel (16) um 22,5° um einen exzentrisch zu ihm angeordneten Drehpunkt (18) geschwenkt und eine zweite Eintrittsspiegelfläche (15a) so in den Strahlengang eingeschwenkt wird, daß sie zusammen mit der ersten Spiegelfläche (16a) den waagrecht eintretenden Strahl um 90° nach unten umlenkt.

Fig.1  Fig.2  Fig.3  Fig.4  Fig.5

Fig. 6

Fig. 7

Fig. 8

Fig. 9

# Fig.10

22
21
21b
21a
6
7
9
20

# Fig.11 a

XI b
24
25
26
XI b

XI a

24

# Fig.11 b

25
26
23

XI a